# EUROPEAN PATENT SPECIFICATION

(11) **EP 1 229 513 B1**
(45) Date of publication and mention of the grant of the patent: **14.10.2009**
(21) Application number: 02250361.9
(22) Date of filing: 18.01.2002
(51) Int. Cl.: G10H 1/00

(54) **Audio signal outputting method and BGM generation method**
Verfahren zur Lieferung eines Audiosignals und Verfahren zur Erzeugung von Hintergrundmusik
Méthode pour fournir un signal audio et méthode pour générer de la musique d'arrière-plan

(30) Priority: 22.01.2001 JP 2001012637
(43) Date of publication of application: 07.08.2002
(73) Proprietor: Kabushiki Kaisha Sega doing business as Sega Corporation, Ohta-ku Tokyo 144-0043 (JP)
(72) Inventor: Mita, Tohru, Urayasu-shi, Chiba 279-0043 (JP); Kaifu, Koji, United Game Artists Inc., Tokyo 150-0002 (JP)
(74) Representative: Brown, Kenneth Richard

(56) References cited:
- EP-A- 0 729 131
- EP-A- 0 823 270
- EP-A- 1 041 536

## Description

### BACKGROUND OF THE INVENTION

### 1. Field of the Invention

The present invention relates to a technique for adjusting a starting timing for producing sounds which include sound effects, voices such as the speaking of lines of dialogue, and music such as background music (BGM). More particularly, this invention relates to an improved technique enabling the production of sounds of an appropriate musical timing by a simple operation without forcing a player to input complicated operations.

### 2. Description of the Related Art

Conventional game devices display animations on screens and also output BGM corresponding to scenes in order to enhance the realistic felling of the game. For example, in a virtual game space composed of three-dimensional coordinates and structured by placing various kinds of objects and virtual human beings therein, a game proceeds as a main character of the game freely moves in the game space, while music is output as BGM in accordance with the relevant scenes. In a vehicle competition game, the game is designed to generate sounds of engines, slipping sounds, collisions and so on in accordance with the progress of the game. Accordingly, a program to develop a game story is stored in advance with images to be displayed as the game progresses and output patterns of audio signals such as music, voices, and sound effects which correspond to the images.

The BGM outputted by the conventional game device is stored in advance in a game program and the game program is designed to change the BGM to be outputted according to the progress of the game. In this case, however, the BGM to be outputted is simply switched depending on the game scenes and other conditions, and the conventional game does reflect input operations of a controller made by a player (a game player or music player) during the game in the generation of the BGM.

Moreover, the sound effects such as explosions in the processing of the game, are output on a previously set timing in order to synchronize with the displayed images such as an image of an explosion. Concerning an interactive game in which the flow of information is not only in one direction, it has been impossible to control the timing of outputting the sound effects in accordance with other timings in order to enable rhythmical operations by the players.

If BGM can be automatically generated in response to the progress of the game and the player's input operations, it is possible to enhance a sense of unity between the player and the BGM to make the player feel as if he/she is playing the music while playing the game. What is important is not to put an excessive burden on the player by forcing them to concentrate on the generation of BGM. If the player is required to handle complicated input operations and input timings for the generation of BGM, the required performance is practically as difficult as playing a normal musical instrument. Therefore, the player cannot easily enjoy generating the BGM, while enjoying the game itself.

It is an object of the present invention to provide a BGM generation technique which enables the player to easily compose the BGM without the requirement of any complicated input operations. Moreover, it is another object of this invention to suggest a technique of adjusting the output timing of the audio signals such as sound effects to an appropriate musical timing in order to implement a harmonious sound environment.

### SUMMARY OF THE INVENTION

In order to solve the above-described problems, this invention provides, in one aspect, a computer program product having a computer program for generating an audio signal stored on a computer readable storage medium, wherein the computer program is adapted to perform the steps of: detecting a sound producing factor which is a cause of sound generation; and deciding on a starting timing for producing a sound which corresponds to the sound producing factor, on the basis of the timing of music which is being reproduced at the time of generation of the sound producing factor.

Accordingly, the sounds, such as the sound effects are processed to be produced in synchronization with the progress of the music, such as BGM, thereby providing a harmonious sound environment.

In an embodiment, the computer program is adapted to perform the step of generating accompaniment corresponding to the status of a game, and generating a melody by detecting a sound producing factor which is a cause of melody generation, and deciding on a starting timing for producing the melody, which corresponds to the sound producing factor, on the basis of the progress of the accompaniment at the time of generation of the sound producing factor.

Accordingly, the accompaniment is automatically generated in accordance with the status of the game, thereby enabling the player to compose BGM according to the status of the game without any complicated operations.

Examples of such a computer readable storage medium include optical storage media (storage media capable of optically reading data, such as CD-ROMs, DVD-ROMs, DVD-RAMs, DVD-Rs, PD disks, MD disks and MO disks), magnetic storage media (storage media capable of magnetically reading data, such as flexible disks, magnetic cards and magnetic tapes), and portable storage media such as memory cartridges including storage elements such as semiconductor memories (such as DRAM) or optical memories, as well as inner storage devices, which are provided inside a computer or on a memory card, and external storage devices such as hard disks.

Moreover, according to another aspect of this invention, there is provided an audio signal outputting method comprising the steps of: detecting a sound producing factor which is a cause of sound generation; and deciding on a starting timing for producing a sound, which corresponds to the sound producing factor, on the basis of the timing of music which is being reproduced at the time of generation of the sound producing factor.

According to a further aspect of this invention, there is provided an audio signal outputting device comprising: detecting means for detecting a sound producing factor which is a cause of sound generation; and sound producing starting timing adjuster for deciding on a starting timing for producing a sound, which corresponds to the sound producing factor, on the basis of the timing of music which is being reproduced at the time of generation of the sound producing factor.

In an embodiment the audio signal outputting method and device generate an accompaniment and a melody as described above in relation to the computer program product.

EP-A-0823270 discloses a video dance game apparatus having a dance music output device for outputting a music signal and a beat information generating device for generating beat information on the basis of the music signal.

### BRIEF DESCRIPTION OF THE DRAWINGS

Fig. 1 is a functional block diagram of the game device having a function to compose BGM according to the present invention.
Fig. 2 is a flow chart showing the entire flow of the operation of the game device.
Fig. 3 is a flow chart describing a melody parameter generation subroutine.
Fig. 4 is a flow chart describing a scale correction processing subroutine.
Fig. 5 is a flow chart describing the step of adjusting a sound producing timing for a sound producing factor.
Fig. 6 shows sound producing factors which cause melody generation, and sound processing units.
Fig. 7 shows a sample game screen.
Fig. 8 is an explanatory drawing illustrative of scale values corresponding to the diatonic scale.
Fig. 9 is an external structural view of the control pad.
Fig. 10 is an explanatory drawing illustrative of melody sound producing timing.
Fig. 11 is an explanatory drawing illustrative of melody sound producing timing.
Fig. 12 is an explanatory drawing illustrative of sound effect producing timing.
Fig. 13 shows the sound producing factors which cause the generation of sound effects, and the sound producing processing units thereof.

### DESCRIPTION OF THF PREFERRED EMBODIMENTS

An embodiment of the present invention is hereinafter explained with reference to the attached drawings.

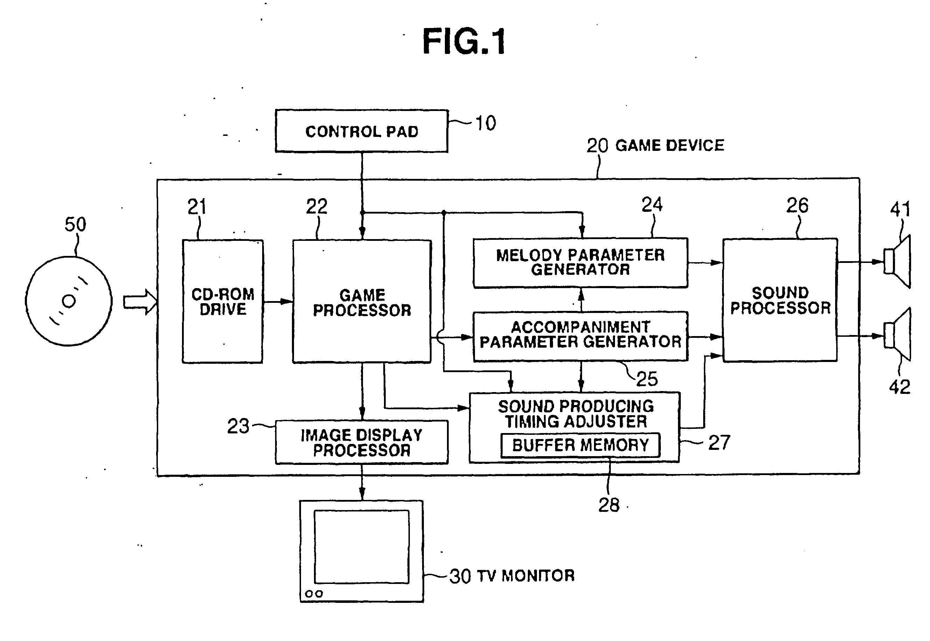

Fig. 1 is a functional block diagram of a game device which includes a BGM generating function. As shown in Fig. 1, a game device 20 comprises: a CD-ROM drive 21; a game processor 22; an image display processor 23; a melody parameter generator 24; an accompaniment parameter generator 25; a sound processor 26; and a sound producing timing adjuster 27. The game processor 22 is structured with various kinds of hardware such as a CPU, RAM and ROM that are necessary for the game processing. The game processor 22 reads and performs a game program supplied from a CD-ROM 50 via the CD-ROM drive 21.

The image display processor 23 includes a frame buffer, a color RAM, an encoder, and the like. The image display processor 23 displays an object which is to be displayed on a TV monitor 30 with polygons (a three-dimensional figure composed of vertexes and ridge lines defined in a model coordinate system) on the basis of command data supplied from the game processor 22, and performs object modeling conversion to a world coordinate system, visual field conversion to a specified camera visual point, three-dimensional clipping processing, hidden-line elimination processing, texture mapping processing, shading processing, display priority processing, and other necessary processing, and then displays the object on the TV monitor 30.

The accompaniment parameter generator 25 is a module which is realized by an accompaniment parameter generation program. The accompaniment parameter generator 25 selects an appropriate accompaniment element from previously registered accompaniment elements, on the basis cf a game parameter supplied from the game processor 22, thereby generating an accompaniment parameter. The accompaniment elements are various musical elements constituting an accompaniment part, which include tempos, keys, chords, rhythm patterns, accompaniment patterns, types of effects, and performances of the effects. The accompaniment parameter is information about a combination of the accompaniment elements constituting the accompaniment part that is actually reproduced by the sound processor 26. The game parameter is the element causing changes to the accompaniment and is set in accordance with various game conditions such as scores the player attains, the speed of the progress of the game, the difference in power between the player's character and an enemy character, and the brightness of the game screen. The detailed procedure of the generation of the accompaniment parameter will be explained later.

The melody parameter generator 24 is a module which is realized by a melody parameter generation program, and it generates a melody parameter on the basis of operational information of the player, which is input with a controller 10, and also on the basis of the accompaniment parameter which is output from the accompaniment parameter generator 25. The melody parameter is a parameter for regulating scales of notes constituting the melody, the starting timing for producing notes, lengths of the notes, and other conditions. The operational information input by the player with the controller 10, contains information about whether a switch button is pressed or released, and whether a lever is pulled down or turned, and information to tell that voices are input from a microphone. The detailed procedure of the generation of the melody parameter will be explained later.

The sound processor 26 comprises, for example, a sound CPU, a sound memory, and a D/A converter. The sound processor 26 composes BGM on the basis of a sound producing request made by the melody parameter generator 24 and the accompaniment parameter generator 25, and then reproduces the melody and accompaniment. The sound memory stores previously registered sound data (such as MIDI data) which corresponds to the melody parameter and the accompaniment parameter. The sound CPU implements, on the timing designated by the melody parameter and the accompaniment parameter, special sound effects such as echoes, reverbs, and choruses based on a DSP function, and it outputs the audio signals to speakers 41 and 42. The output timing of the audio signals such as the melodies and the sound effects that are to be produced by the sound processor 26, is adjusted by the sound producing timing adjuster 27.

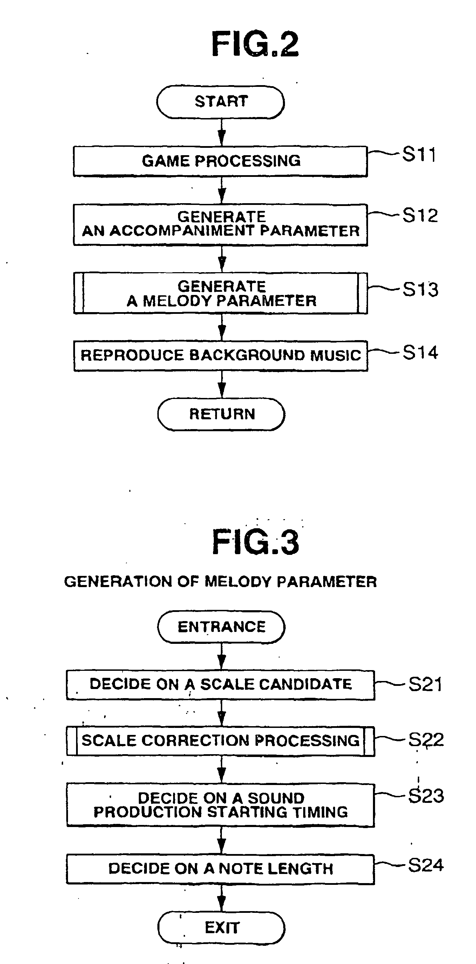

Fig. 2 is a flow chart indicating the automatic music generating steps performed by the game device 20. Each processing step shown in Fig. 2 is repeatedly executed in synchronization with an image renewal period (for example, one-sixtieth (1/60) of a second). As shown in the flow chart, the automatic music generating steps comprises: a game processing step (S11) conducted by the game processor 22; an accompaniment parameter generating step (S12) conducted by the accompaniment parameter generator 25; a melody parameter generating step (S13) conducted by the melody parameter generator 24; and a BGM reproduction processing step (S14) conducted by the sound processor 26. Each processing step is hereinafter explained.

### Game Processing Step (S11)

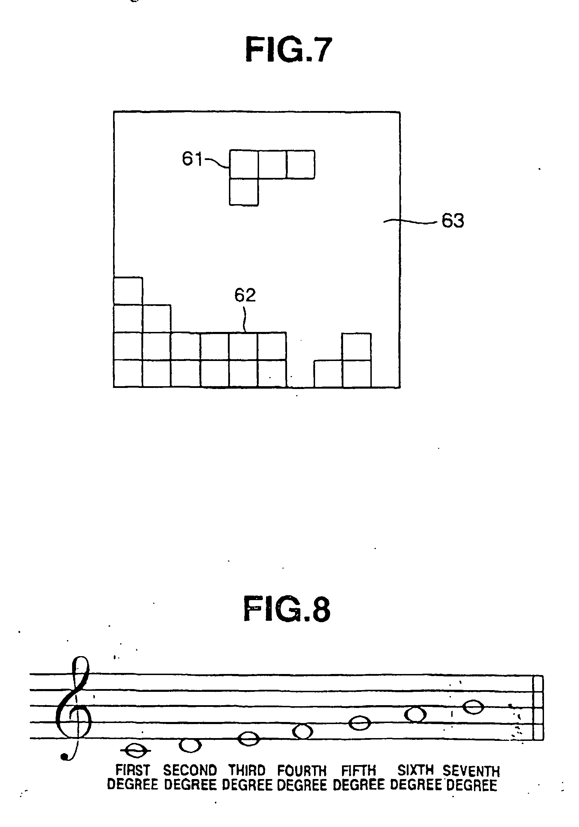

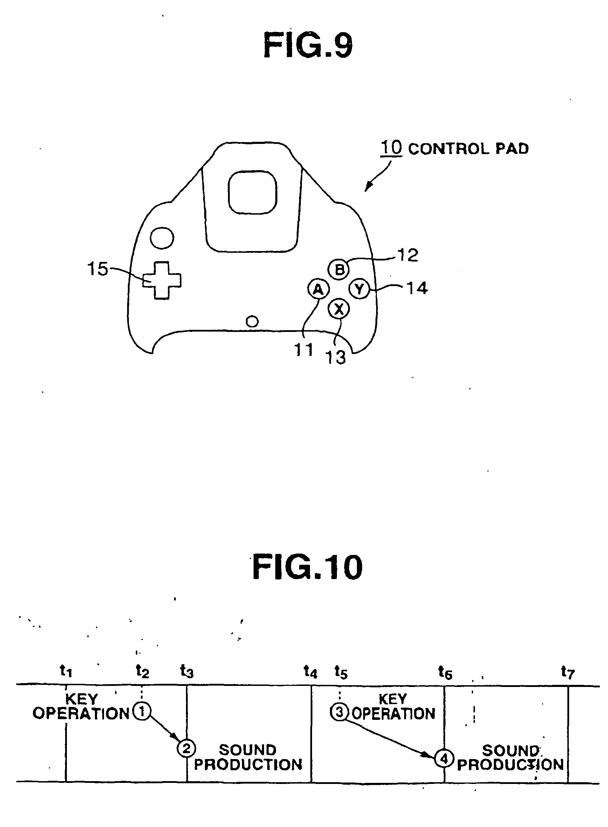

Fig. 7 shows a sample game screen. The content of the game is that a landing position and a landing state of an L-shared moving block 61, which falls from the right top side of a virtual space 63 as shown in Fig. 7, are controlled by operating the controller 10, and when the depression and projection of the moving block 61 are matched with the depression and projection of accumulated blocks 62, a point is added. Fig. 9 is an external structural view of the controller 10. The controller 10 has a button A 11, a button B 12, a button X 13, a button Y 14, and a cross key 15 arranged thereon. The player moves the moving block 61 to the right or left by slanting the cross key 15 to the right or left, thereby controlling the landing position of the moving block 61. The player also turns the moving block 61 by operating, for example, the button A 11, thereby controlling the landing posture of the moving block 61.

### Accompaniment Parameter Generating Step (S12)

When the accompaniment parameter generator 25 obtains the game parameter from the game processor 22, for example, the accompaniment parameter generator 25 generates the accompaniment parameter by conducting, for example, the following operations: selecting a major key if the game proceeds favorably for the player; selecting a minor key if the game proceeds unfavorably for the player; using many cheerful chords if something happens favorable to the player; lessening the chord changes if the game proceeds monotonously; speeding up the tempo of the accompaniment if the player frequently operates the controller 10; slowing down the tempo at the end of a series of scenes; selecting a complicated performance pattern in a scene requiring the player to conduct complicated operations.

In role-playing games or competition games, for example, the accompaniment parameter generator 25 generates the accompaniment parameter by conducting, for example, the following operations: selecting a cheerful accompaniment pattern if the player's character enters a bright stage; selecting a somber accompaniment pattern if the player's character enters a dark stage; selecting an accompaniment pattern which sounds tense if the player's character is surrounded by enemy characters; selecting an accompaniment pattern which sounds rhythmical if the player's character escapes from the siege of the enemy characters; increasing the influence of the effects such as echoes if the player's character enters a narrow area; decreasing the influence of the effects such as echoes if the player's character enters a wide area; and changing the tempos, keys, chords, rhythm patterns and accompaniment patterns according to the movements of the player's characters, for example, when the player's character stands up, changes its moving direction, jumps, suffers damages, wins an item, moves violently, moves slowly, spins around, makes small movements, makes big movements, or falls down.

Performance patterns generated by the melody parameter generator 24, which will be explained later, may be used as the rhythm patterns or the accompaniment patterns. In this case, the performance patterns are stored in a memory and the performance patterns of frequent use are used at a certain rate. It is also possible to use existing musical compositions as the accompaniment.

### Melody Parameter Generating Step (S13)

When the melody parameter generator 24 receives the operational signals from the button A 11, the button B,12, the button X 13, the button Y 14, and the cross key 15 on the control pad 10, it then decides on a scale, a sound production starting time, and a note length, on the basis of information about, for example, the present tone and chord of the accompaniment parameter generated by the accompaniment parameter generator 25, and a time position in a musical composition. Fig. 3 shows a subroutine of the melody generating steps, which consists of a scale candidate deciding step (S21), a scale correction processing step (S22), a sound production starting time deciding step (S23) and a note length deciding step (S24). Each processing step will be explained in details below.

### Scale Candidate Deciding Step (S21)

In this step, the melody parameter generator 24 monitors key operations made by the player with the control pad 10, in time with the synchronization of an image renewal period. When the melody parameter generator 24 detects a key operation, it decides on a scale candidate which corresponds to the key operation. As shown in Fig. 8, concerning the scale of tones of an accompaniment, numbers (scale value) are given to the tones in the ascending order from the lower scale. In the example of Fig. 8, the tones and their corresponding degrees are as follows: do (first degree), re (second degree), mi (third degree), fa (fourth degree), so (fifth degree), la (sixth degree) and ti (seventh degree). The scale shown in Fig. 8 is the diatonic scale. However, without limitation to such type of scale, the scale candidate is decided on basis of the scale of the accompaniment which is presently being reproduced.

As a method of deciding the scale candidate, there is a method of deciding it on the basis of a relative value and a method of deciding it on the basis of an absolute value. When deciding the scale candidate on the basis of a relative value, for example, the immediate preceding generated tone is set as a standard. The scale candidate is decided by conducting processing, for example, to lower the scale value one value if the cross key 15 is tilted to the right (or downward) to move the moving block 61 to the right (or downward), and to heighten the scale value one value if the cross key 15 is tilted to the left (or upward) to move the moving block 61 to the left (or upward). The scale candidate may also be decided by setting a positive numeric value to the button A 11 and a negative numeric value to the button B 12. Moreover, the scale candidate may be decided by setting a negative value if an analog key (not shown in the drawing) is turned to the right, and by setting a positive value if the analog key is turned to the left. Deciding the scale value on the basis of a relative value gives rise to such advantageous effects that a range of values in which the numeric value of the scale value can be decided does not have to be wide and that the continuity of a melody can be retained because the scale value will not deviate further from the previous scale.

When the scale candidate is decided on the basis of an absolute value, for example, the scale candidate is decided by assigning a scale value of the second degree to the button A 11, the third degree to the button B 12, the fifth degree to the button X 13, and the seventh degree to the button Y 14. As another example, such a structure may be employed that a virtual space 63 is divided into a plurality of regions, in each of which a degree of a scale value is set, thereby deciding the scale candidate corresponding to a region to which the moving block 61 has moved. Deciding the degree of the scale value on the basis of an absolute value gives rise to such an advantageous effect that the player can enjoy controlling the music as if he/she is playing a real musical instrument.

### Scale Correction Processing Step (S22)

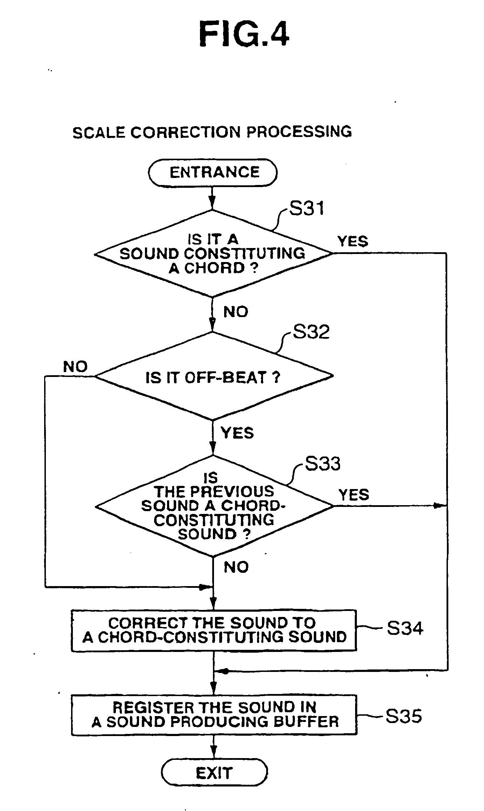

In this step, the melody parameter generator 24 determines whether the scale candidate which was provisionally decided in the above-described method is the scale that matches the music theories. If it does not match the music theories, the melody parameter generator 24 corrects the scale candidate to a scale of an appropriate frequency by referring to, for example, the key and chord of the accompaniment at the moment. Fig. 4 is a flow chart showing a subroutine of the scale correction processing steps. As shown in Fig. 4, if the scale candidate is a chord-constituting sound (S31; YES), there is no problem in producing the sound and, therefore, the sound is registered in a sound producing buffer (S35). If the scale candidate is not a chord-constituting sound (S31; NO), there is a problem in producing the sound as it is and, therefore, correction processing is conducted as follows. If the producing timing of the scale candidate is on-beat (S32; NO), the melody parameter generator 24 corrects the scale candidate to a sound constituting a chord of which frequency is closest to the scale candidate (S34) and registers the sound in the sound producing buffer (S35). If the producing timing of the scale candidate is off-beat (S32; YES), the melody parameter generator 24 checks whether the previous sound was a chord-constituting sound (S33). If the previous sound was not a chord-constituting sound (S33; NO), the melody parameter generator 24 corrects the scale candidate to a sound constituting a chord of which frequency is closest to the most appropriate note (S34) and registers the sound in the sound producing buffer (S35). If the previous sound was a chord-constituting sound (S33; YES), the sound is registered in the sound producing buffer (S35).

### Sound Production Starting Timing Deciding Step (S23)

In this step, the melody parameter generator 24 decides on the time for producing a melody. As a method of deciding on the starting timing for producing the melody, there are two methods: a method of conducting sourd producing processing when the player operates the keys on the control pad 10 (direct sound producing processing); and a method of conducting sound producing processing after adjusting the sound producing time in accordance with the accompaniment progress timing (sound production starting timing adjustment processing). In the method of the direct sound producing processing, the key operations by the player coincide with the sound producing timing and, therefore, the player can enjoy the feeling as if he/she is playing a real musical instrument.

Fig. 10 is an explanatory drawing illustrative of the sound production starting time adjustment processing. In Fig. 10, times t₁, t₃, t₄, t₆ and t₇ are the sound producing timings of the melody in synchronization with the accompaniment, and the timings are determined on the basis of processing units such as a quarter note, a eighth note and a sixteenth note. The sound producing processing of the melody in response to the key operation as inputted on the time t₂ is not conducted at that moment, but a delay time (t₃-t₂) is set so that the sound producing processing is suspended until the time t₃ which is the closest sound producing timing. Similarly, the sound producing processing of the melody in response to the key operation as inputted on the time t₅ is not conducted at that moment, but a delay time (t₆-t₅) is set so that the sound producing processing is suspended until the time t₆ which is the closest melody sound producing timing. Accordingly, instead of conducting the sound production at the time of the key operation, the starting time for producing the melody is set in order to produce the melody sound on the sound producing timings that are predetermined for each accompaniment. Therefore, the player can freely compose music while enjoying the game play without being forced to input any complicated operations.

### Note Length Deciding Step (524)

In this step, the melody parameter generator 24 decides on note lengths of the notes in the melody. Examples of the method for deciding the note lengths include: a method of terminating the sound producing processing upon the next key operation; and a method of terminating the sound producing processing when a bar, in which the melody presently produced is included is finished, or on any corresponding musical timing. When a sound of low continuity is used, it is not always necessary to decide on the note lengths.

### BGM Reproduction Processing Step (S14)

In this step, the sound processor 26 conducts the BGM reproduction processing on the basis of the melody parameter supplied from the melody parameter generator 24, the accompaniment parameter supplied from the accompaniment parameter generator 25, and the sound producing factor and its sound producing processing unit supplied from the sound producing timing adjuster 27. The sound producing timing of the melocy is adjusted by the sound producing timing adjuster 27 in order to synchronize with the accompaniment progress timing. The sound producing timing adjuster 27 comprises a buffer memory 28 and receives the operational signals, i.e., the sound producing factor, inputted by the player with the control pad 10, and writes the sound producing processing unit corresponding to the sound producing factor in the buffer memory 28. The sound producing processing unit is determined by units such as a fourth note, eighth note, or a sixteenth note.

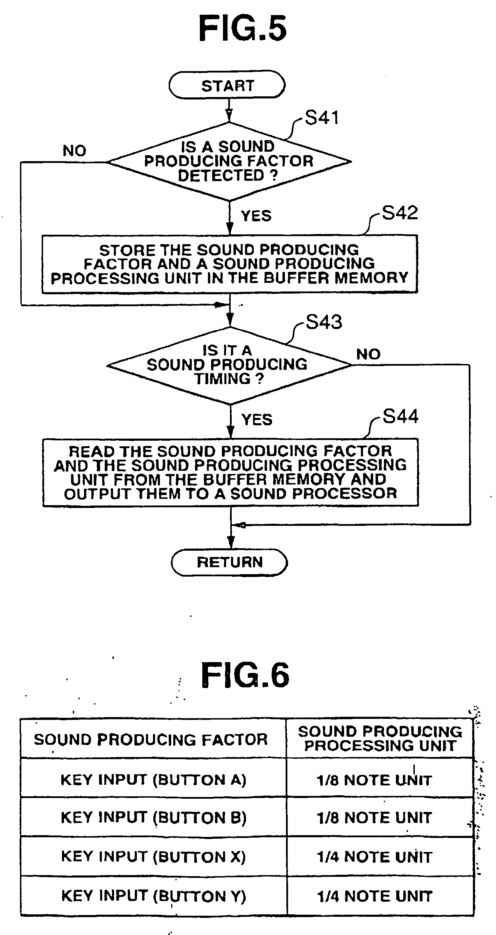

Fig. 5 is a flow chart indicating the processing steps of adjusting the sound producing timing of the melody. Each processing step in Fig. 5 is conducted repeatedly in synchronization with an image renewal period (for example, 1/60 second). The sound producing timing adjuster 27 detects the sound producing factor supplied from the control pad 10 (S41; YES), and writes the type of the sound producing factor and the sound producing processing unit in the buffer memory 28 (S42). The data written in the buffer memory 28 is as shown in Fig. 6. As shown in Fig. 6, a processing unit of an eighth note is allotted to the key input of the button A 11, and a processing unit of an eighth note is allotted to the key input of the button B 12. A processing unit of a quarter note is allotted to the key input of the button X 13 and a processing unit of a quarter note is allotted to the key input of the button Y 14.

The sound producing timing adjuster 27 acquires information about the melody sound producing timing supplied from the accompaniment parameter generator 25. Upon the sound producing timing (S43; YES), the sound producing timing adjuster 27 reads the sound producing factor and the sound producing processing unit from the buffer memory 28 and outputs them to the sound processor 26 (S44). The data supplied to the sound processor 26 is then deleted from the buffer memory 28. Through the above-described steps, the sound processor 26 generates BGM.

In the above explanation, in the melody parameter generating step (S13), the scale, the sound production starting time, and the note lengths are decided. In addition, for example, sound quality control, volume control, tone color control, and generation of sub-melody may be added to the melody parameters. The control of the sound quality is conducted, for example, by employing: heavy sound quality when the player's character moves agilely; soft sound quality when the player's character moves slowly; cheerful sound quality when the player's character enters a bright area; sound quality with subtly changing pitches when the player's character spins around; or sound quality that changes in accordance with the sound quality of the accompaniment. Thus, the sound quality changes in accordance with the sound quality of the accompaniment.

The volume control is performed, for example, in the following manner: by turning up the volume when the player's character moves around vigorously; by turning down the volume when the player's character moves slowly; by turning up the volume when a game score is increased; or adjusting the volume in accordance with the volume of the accompaniment. The control of the tone color is conducted, for example, in the following manner: by changing musical instruments (such as a piano, a guitar, and a violin) when a stage changes; by changing the musical instrument when the player's character is changed; or by changing the musical instrument when the power of the player's character is increased. The generation processing of the sub-melody is conducted such that when the game enters into a special state such as a last stage, a sub-melody of a 3-degree (or 5-degree) higher (or lower) scale is reproduced over the melody.

Such structure may be employed that the melody generated in the above-described processing steps is stored in the memory and is reproduced without requiring the operations by the player. For example, the melody generated when the moving block 61 is moved to the right or left is stored in the memory and is reproduced when the moving block 61 falls down in the virtual space 63 or when a score is added by matching the projections and depressions of the accumulated block 62 with the projection and depression of the moving block of 61.

As explained above, in this embodiment, the player performs the usual game operations without paying much attention to the fact that "the music is generated by his/her operations," while BGM which conforms to the status of the game can be automatically generated by easy key operations. The above explanation describes the case in which the BGM for the game is generated by the player's operations. However, without limitation to such form, the present invention can also be employed as a form of a music game to compete for superiority of music compositions which are generated, or as a form of musical instrument to easily arrange a melody or an accompaniment of existing music compositions, or as a form of session among a multiplicity of persons via a communication network such as a telephone line, or as a form of a composing tool for the purpose of easily generating a music composition as intended by a user.

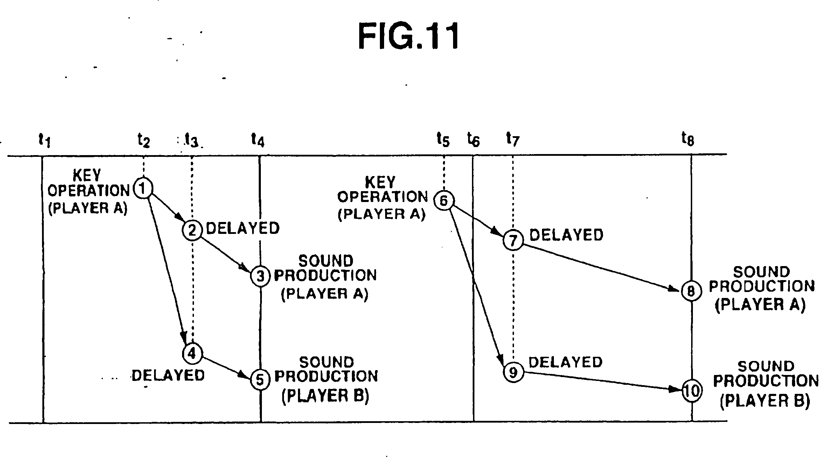

The form of performing a session among a multiplicity of persons via the communication network is hereinafter explained with reference to Fig. 11. The precondition is that a player A and a player B at their homes connect their game devices to the telephone line via modems in order to perform a session via the network. In Fig. 11, times t₁, t₄, t₆ and t₈ are the melody sound producing timings. When a game is generally played via the network, it is usually necessary to take in to consideration the delay time (time lag) of signals. Accordingly, each game device buffers the signals from the other game device and reads the signals from the buffer after a specified period of time, thereby conducting the game processing. When this delay time is set as T [msec]; , the operational signal from the player is processed at each game device after the delay time T [msec].

The key operation inputted at time t₂ is processed as operational signals by the game devices of the players A and B at time t₃ after a lapse of the delay time T [msec]. The signals are made between time t₁ and time t₄, and the sound producing processing is conducted at the sites of the respective players at time t₄. On the other hand, when the game device is not connected to the network, but is used as a stand-alone game device, the key operation at time t₂ is subject to the sound producing processing at time t₄. Accordingly, in this embodiment, a melody in response to the key operation is produced on the melody sound producing timing which is determined. The production of the melody is conducted without depending on the delay time which is peculiar to network game play.

However, when the input time of the key operation is within T [msec] of the sound producing timing, the production of the melody is conducted depending on the delay time. For example, assuming that the player A operates the key at time t₅, in the case of (t₆-t₅) < T [msec], the key operation inputted at time t₅ is processed as the operational signals of the key operation by the game devices of the players A and B at time t₇ after a lapse of T [msec]. Since these signals are made between time t₆ to time t₃, the sound producing processing is conducted at the sites of the respective players at time t₈. However, the delay time T [msec] is small enough to be ignored as compared with the intervals of the sound producing timings and, therefore, the production of the melody is conducted without depending on the delay time which is peculiar to the network game play.

The above description explains, as an example, the key operation by the player as the sound producing factor which becomes a cause of melody production. However, there is no special limitation to the sound producing factor as long as it occurs discretely in a certain period of time and is of various types. For example, the sound producing factor may be defined according to the status of the game, for example, when the game proceeds advantageously for the player, when the game proceeds disadvantageously to the player, when a good thing happens to the player, when the game progress becomes monotonous, when the player operates the keys frequently, when a certain series of game scenes are completed, or when the player moves to scenes requiring complicated operations.

Furthermore, for example, in a role-playing game cr a competition game, the sound producing factor may be defined according to the status of the game or the movements of the player's character as follows: when the player's character enters a bright stage; when it moves to a dark stage; when it is surrounded by enemy characters; when it escapes from a siege by the enemy characters; when it enters a narrow area; when it enters a wide area; when it stands up; when it changes its moving direction; when it jumps; when it suffers injuries; when it wins an item; when it uses the item; when it moves vigorously; when it moves slowly; when it spins around; when it makes small movements; when it makes large movements; or when it falls down.

It is also possible to set tones beforehand for different types of the sound producing factors. For example, the tone "do" is set for the case in which the player' s character stands up, the tone "re" is set for the case in which the player's character changes its moving direction, the tone "mi" is set for the case in which the player's character jumps. The sound producing factor of the melody may also be defined depending on the parameters, that are changed or renewed as necessary, in accordance with the progress of the game, such as the brightness of the game screen, the number of the enemy characters, and the scores obtained by the player.

Moreover, output signals from the other devices connected to the game device, such as output signals from a sound input and output device and an image input and output device such as a digital camera and a scanner, may be defined as the sound producing factors. Furthermore, interruption signals from the peripheral devices for the game software (the peripheral devices such as standard devices and expansion devices) may be defined as the sound producing factor. Examples of the peripheral devices include, a standard game controller, a joy stick, a steering wheel, a keyboard, a mouse, a gun-shaped controller, a backup memory, a TV monitor, and a set top box. If such structure is employed, a melody is automatically generated in synchronization with the parameters, which are changed or renewed as necessary, in accordance with the progress of the game, the behaviors of various characters such as the player's character and the enemy characters, changes of the status of such characters, increases and decreases in the number of such characters, the number of items acquired, and the scores acquired.

In the accompaniment parameter generating step (S12) and the melody parameter generating step (S13), the melody parameter and the accompaniment parameter can be generated by conducting, for example, the following operations: by employing a cheerful or high-tempo melody or accompaniment when the game proceeds advantageously to the player; by employing a gloomy or slow-tempo melody or accompaniment when the came proceeds disadvantageously to the player; by employing a lively melody or accompaniment when a good thing happens to the player; by decreasing changes in the melody or accompaniment patterns when the game proceeds monotonously; by increasing the tempo of the melody or accompaniment when the player operates the keys frequently; by decreasing the tempo when a certain series of the game scenes are completed; by employing complicated melody or accompaniment patterns when the player moves to scenes requiring complicated operations.

The above description explains the case in which the BGM is automatically generated in response to the key operations by the player. However, without limitation to such method, it is possible to produce sound effects in synchronization with the sound producing timing of the BGM. The sound effects are the sounds that enhance the realistic feel of the game and the acoustic effects, for example, explosion sounds in a shooting game, shooting sounds of bullets, slipping sounds of tires in a racing game, engine sounds, collision sounds at crash, and ball-hitting sounds.

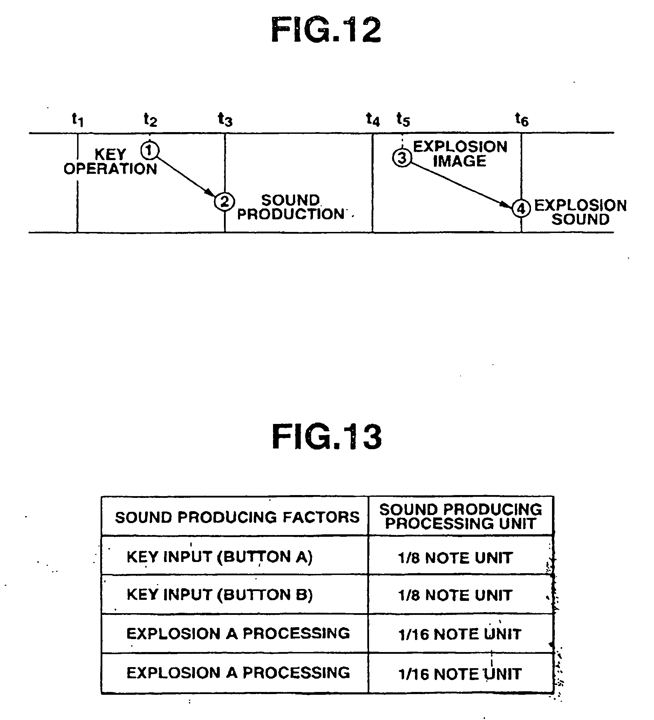

The sound producing timing of the sound effects is explained with reference to Fig. 12. The method of adjusting the sound producing timing of the sound effects is similar to that of adjusting the starting time for producing the melody as described above. In Fig. 12, times t₁, t₃, t₄ and t₆ are the timings on which the sound effects should be produced in synchronization with the BGM. The times are determined by using, as the reference, the processing units such as a quarter note, an eighth note and a sixteenth note. Bullet shooting sounds and explosion sounds are taken as examples of the sound effects in a shooting game. The precondition is that the player's key input and the explosion processing are defined as the sound producing factors and that the bullet firing processing is conducted at the same time as the player's key operation. In Fig. 12, the player operated the keys at time t₂. In a usual game, the sound producing processing of the bullet firing sound is conducted at the same time as the key input, that is, at time t₂. In the present invention, however, the delay time (t₃-t₂) is set so that the sound effect is not produced at time t₂, but is retained until time t₃ which is the closest sound producing timing, and the sound is then produced.

In Fig. 12, the processing is conducted to display an explosion image at time t₅. In a usual game, the explosion sound is produced at the same time as the image of the explosion is displayed, that is, at time t₅. In the present invention, however, the delay time (t₆-t₅) is set so that the sound effect is not produced at time t₅, but is retained until time t₆ which is the closest sound producing timing, and the sound is then produced. Accordingly, the sound effect is not produced when the key input is conducted or when the explosion image is displayed, but a starting time for producing the sound effect is set so that the sound effect will be produced on the sound producing timing which is predetermined for all BGM. Therefore, the player can make a music composition while enjoying playing the game without being forced to input complicated operations.

In order to output the sound effect in synchronization with the BGM, the sound producing timing adjuster 27 receives, from the game processor 22, the sound producing factors such as the key input and the explosion processing, writes the sound processing unit corresponding to the sound producing factor in the buffer memory 28, and supplies the data to the sound processor 26 in synchronization with the output timing of the sound effect. The basic processing steps are as shown in Fig. 5. The data to be written in the buffer memory 26 is as shown in Fig. 13. As shown in Fig. 13, the processing unit of an eighth note is allotted to the key input of the button A 11 and to the key input of the button B 12 respectively. The processing unit of a sixteenth note is allotted to explosion processing A and to explosion processing B respectively. Accordingly the sound processor 26 can output the sound effect in synchronization with the BGM.

The terms "processor(s)," "generator(s)," "adjuster(s)" and "means" used in this specification indicate the modules that are realized in the automatic music composition generating processing or the BGM generating processing and do not necessarily correspond to specific hardware or software routines. The same hardware element sometimes realizes a plurality of "processors," "generators," "adjusters" or "means", while one "processor," "generator," "adjuster" or "means" is sometimes realized in relation to a plurality of hardware elements.

The present invention can provide a technique to easily compose the BGM without requiring the complicated operations of the player. This invention can also provide a technique to implement a harmonized sound environment by adjusting the output timing of the audio signals such as sound effects, in synchronization with the BGM.

## Claims

1. A computer program product having a computer program for generating an audio signal stored on a computer readable storage medium,
wherein the computer program is adapted to perform the steps of :
detecting (S41) a sound producing factor which is a cause of sound generation; and
deciding (S43, S44) on a starting timing for producing a sound which corresponds to the sound producing factor, on the basis of the timing of music which is being reproduced at the time of generation of the sound producing factor.

2. A computer program product according to claim 1, wherein the detecting step detects an operational signal output from a controller (10) operated by a player as said sound producing factor which is a cause of sound effect generation for the processing of a game.

3. A computer program product according to claim 1, wherein the computer program is adapted to perform the step of generating (S 12) an accompaniment which corresponds to the status of a game; and
generating (S13) a melody by detecting in the detecting step a sound producing factor which is a cause of melody generation and deciding in the deciding step on a starting timing for producing the melody which corresponds to the sound producing factor on the basis of the progress of the accompaniment at the time of generation of the sound producing factor.

4. A computer program product according to claim 3, wherein the progress includes information about a melody producing timing which is predetermined for every accompaniment:

5. A computer program product according to claim 3, wherein the computer program further provides the step of deciding on a scale of the melody corresponding to the type, of the sound producing factor.

6. A computer program product according to claim 3, wherein the sound producing factor is an operational signal from a controller (10) operated by a player.

7. An audio signal outputting method comprising the steps of:
detecting a sound producing factor which is a cause of sound generation; and
deciding on a starting timing for producing a sound, which corresponds to the sound producing factor, on the basis of the timing of music which is being reproduced at the time of generation of the sound producing factor.

8. An audio signal outputting method according to claim 7, wherein the detecting step detects an operational signal output from a controller operated by a player as a sound producing factor which is a cause of sound effect generation for the processing of a game.

9. A method for generating background music comprising the method of claim 7, including:
generating (S12) an accompaniment which corresponds to the status of a game; and
generating (S 13) a melody by detecting in the detecting step a sound producing factor which is a cause of melody generation and by deciding in the deciding step on a starting timing for producing the melody which corresponds to the sound producing factor on the basis of the progress of the accompaniment at the time of generation of the sound producing factor.

10. A background music generating method according to claim 9, wherein the progress includes information about a melody producing timing which is predetermined for every accompaniment.

11. A background music generating method according to claim 9, comprising the step of deciding on a scale of the melody corresponding to the type of the sound producing factor.

12. A background music generating method according to claim 9, wherein the sound producing factor is an operational signal from a controller operated by a player.

13. An audio signal outputting device comprising:
detecting means (22) for detecting a sound producing factor which is a cause of sound generation; and
sound producing starting timing adjuster (27) for deciding on a starting timing for producing a sound, which corresponds to the sound producing factor, on the basis of the timing of music which is being reproduced at the time of generation of the sound producing factor.

14. An audio signal outputting device according to claim 13, further comprising an accompaniment generating means (25) for generating an accompaniment which corresponds to the status of a game;
wherein said sound producing starting timer is arranged to generate a melody by deciding on a starting timing for producing the melody which corresponds to the sound producing factor on the basis of the progress of the accompaniment at the time of generation of the sound producing factor.

## Patentansprüche

1. Computerprogrammprodukt, das ein Computerprogramm zum Erzeugen eines Audiosignals aufweist, das auf einem computerlesbaren Speichermedium gespeichert ist,
wobei das Computerprogramm geeignet ist, die Schritte auszuführen:
Detektieren (S41) eines Schallerzeugungsfaktors, der eine Ursache der Schallerzeugung ist; und
zu einem Startzeitpunkt eine Entscheidung treffen (S43, S44) für die Erzeugung eines Schalls, der dem Schallerzeugungsfaktor entspricht, basierend auf dem Timing der Musik, welche zum Zeitpunkt der Erzeugung des Schallerzeugungsfaktors wiedergegeben wird.

2. Computerprogrammprodukt nach Anspruch 1, wobei der Detektionsschritt eine Betriebssignalausgabe aus einem Steuergerät (10), das von einem Spieler bedient wird, als den Schallerzeugungsfaktor detektiert, der eine Ursache der Schalleffekterzeugung für das Abarbeiten eines Spiels ist.

3. Computerprogrammprodukt nach Anspruch 1, wobei das Computerprogramm geeignet ist, den Schritt zum Erzeugen (S12) einer Begleitung auszuführen, die dem Zustand des Spiels entspricht; und
Erzeugen (S13) einer Melodie **dadurch**, dass im Detektionsschritt ein Schallerzeugungsfaktor detektiert wird, der eine Ursache einer Melodieerzeugung ist, und dass im Entscheidungsschritt zu einem Startzeitpunkt eine Entscheidung für die Erzeugung der Melodie getroffen wird, die dem Schallerzeugungsfaktor entspricht, basierend auf dem Ablauf der Begleitung zum Zeitpunkt der Erzeugung des Schallerzeugungsfaktors.

4. Computerprogrammprodukt nach Anspruch 3, wobei in dem Ablauf Informationen über ein melodieerzeugendes Timing enthalten sind, welches für jede Begleitung vorgegeben ist.

5. Computerprogrammprodukt nach Anspruch 3, wobei das Computerprogramm ferner den Schritt zur Entscheidung auf einer Skala der Melodie bereitstellt, die dem Typ des Schallerzeugungsfaktors entspricht.

6. Computerprogrammprodukt nach Anspruch 3, wobei der Schallerzeugungsfaktor ein Betriebssignal aus einem Steuergerät (10) ist, das durch einen Spieler bedient wird.

7. Audiosignalausgabeverfahren, das die Schritte umfasst:
Detektieren eines Schallerzeugungsfaktors, der eine Ursache der Schallerzeugung ist; und
zu einem Startzeitpunkt die Entscheidung treffen für das Erzeugen eines Schalls, der dem Schallerzeugungsfaktor entspricht, basierend auf dem Timing der Musik, welche zum Zeitpunkt der Erzeugung des Schallerzeugungsfaktors wiedergegeben wird.

8. Audiosignalausgabeverfahren nach Anspruch 7, wobei der Detektionsschritt eine Betriebssignalausgabe aus einem Steuergerät, das von einem Spieler bedient wird, als einen Schallerzeugungsfaktor detektiert, der eine Ursache der Schalleffekterzeugung für das Abarbeiten eines Spiels ist.

9. Verfahren zum Erzeugen von Hintergrundmusik, in dem das Verfahren nach Anspruch 7 enthalten ist, das umfasst:
Erzeugen (S12) einer Begleitung, die dem Zustand eines Spiels entspricht; und
Erzeugen (S13) einer Melodie **dadurch**, dass im Detektionsschritt ein Schallerzeugungsfaktor detektiert wird, der die Ursache der Melodieerzeugung ist, und dass im Entscheidungsschritt zu einem Startzeitpunkt eine Entscheidung für das Erzeugen der Melodie getroffen wird, die dem Schallerzeugungsfaktor entspricht, basierend auf dem Ablauf der Begleitung zum Zeitpunkt der Erzeugung des Schallerzeugungsfaktors.

10. Verfahren zum Erzeugen von Hintergrundmusik nach Anspruch 9, wobei in dem Ablauf die Informationen über ein melodieerzeugendes Timing enthalten sind, welches für jede Begleitung vorgegeben ist.

11. Verfahren zum Erzeugen von Hintergrundmusik nach Anspruch 9, das den Schritt zur Entscheidung auf einer Skala der Melodie umfasst, die dem Typ des Schallerzeugungsfaktors entspricht.

12. Verfahren zum Erzeugen von Hintergrundmusik nach Anspruch 9, wobei der Schallerzeugungsfaktor ein Betriebssignal aus einem Steuergerät ist, das durch einen Spieler bedient wird.

13. Audiosignalausgabevorrichtung, umfassend:
Detektionsmittel (22) für das Detektieren eines Schallerzeugungsfaktors, der eine Ursache der Schallerzeugung ist; und
Einstellelement (27) der Schallerzeugungsstartzeit, um zu einem Startzeitpunkt die Entscheidung für das Erzeugen eines Schalls zu treffen, der dem Schallerzeugungsfaktor entspricht, basierend auf dem Timing der Musik, welche zum Zeitpunkt der Erzeugung des Schallerzeugungsfaktors wiedergegeben wird.

14. Audiosignalausgabevorrichtung nach Anspruch 13, ferner ein Begleitungserzeugungsmittel (25) zum Erzeugen einer Begleitung umfassend, die dem Zustand eines Spiels entspricht,
wobei der Schallerzeugungs-Startzeitschalter eingerichtet ist, eine Melodie **dadurch** zu erzeugen, dass zu einem Startzeitpunkt eine Entscheidung für die Erzeugung der Melodie getroffen wird, die dem Schallerzeugungsfaktor entspricht, basierend auf dem Ablauf der Begleitung zum Zeitpunkt der Erzeugung des Schallerzeugungsfaktors.

## Revendications

1. Produit programme d'ordinateur ayant un programme d'ordinateur destiné à générer un signal audio stocké sur un support de stockage pouvant être lu par un ordinateur,
dans lequel le programme d'ordinateur est apte à exécuter les étapes consistant à :
détecter (S41) un facteur de production de son qui est une cause de génération de son ; et
décider (S43, S44) d'une synchronisation de début afin de produire un son qui correspond au facteur de production de son, sur la base de la synchronisation de la musique qui est reproduite au moment de la génération du facteur de production de son.

2. Produit programme d'ordinateur selon la revendication 1, dans lequel l'étape de détection détecte un signal opérationnel délivré en sortie par un contrôleur (10) actionné par un joueur en tant que dit facteur de production de son qui est une cause de génération d'un effet sonore pour le traitement d'un jeu.

3. Produit programme d'ordinateur selon la revendication 1, dans lequel le programme d'ordinateur est apte à exécuter l'étape consistant à générer (S 12) un accompagnement qui correspond à l'état d'un jeu ; et à
générer (S 13) une mélodie en détectant dans l'étape de détection un facteur de production de son qui est une cause de génération de mélodie et en décidant dans l'étape de décision d'une synchronisation de début afin de produire la mélodie qui correspond au facteur de production de son sur la base de la progression de l'accompagnement au moment de la génération du facteur de production de son.

4. Produit programme d'ordinateur selon la revendication 3, dans lequel la progression inclut des informations qui concernent une synchronisation de production de mélodie qui est prédéterminée pour chaque accompagnement.

5. Produit programme d'ordinateur selon la revendication 3, dans lequel le programme d'ordinateur fournit en outre l'étape consistant à décider d'une gamme de la mélodie correspondant au type du facteur de production de son.

6. Produit programme d'ordinateur selon la revendication 3, dans lequel le facteur de production de son est un signal opérationnel en provenance d'un contrôleur (10) actionné par un joueur.

7. Procédé destiné à délivrer en sortie un signal audio comprenant les étapes consistant à :
détecter un facteur de production de son qui est une cause de génération de son ; et à
décider d'une synchronisation de début afin de produire un son, qui correspond au facteur de production de son, sur la base de la synchronisation de la musique qui est reproduite au moment de la génération du facteur de production de son.

8. Procédé destiné à délivrer en sortie un signal audio selon la revendication 7, dans lequel l'étape de détection détecte un signal opérationnel délivré en sortie par un contrôleur actionné par un joueur en tant que facteur de production de son qui est une cause de génération d'un effet sonore pour le traitement d'un jeu.

9. Procédé de génération d'une musique de fond qui comprend le procédé de la revendication 7, incluant les étapes consistant à :
générer (S 12) un accompagnement qui correspond à l'état d'un jeu ; et à
générer (S 13) une mélodie en détectant dans l'étape de détection un facteur de production de son qui est une cause de génération de mélodie et en décidant dans l'étape de décision d'une synchronisation de début afin de produire la mélodie qui correspond au facteur de production de son sur la base de la progression de l'accompagnement au moment de la génération du facteur de production de son.

10. Procédé de génération d'une musique de fond selon la revendication 9,
dans lequel la progression inclut des informations qui concernent une synchronisation de production de mélodie qui est prédéterminée pour chaque accompagnement.

11. Procédé de génération d'une musique de fond selon la revendication 9, comprenant l'étape consistant à décider d'une gamme de la mélodie correspondant au type du facteur de production de son.

12. Procédé de génération d'une musique de fond selon la revendication 9,
dans lequel le facteur de production de son est un signal opérationnel en provenance d'un contrôleur actionné par un joueur.

13. Dispositif destiné à délivrer en sortie un signal audio comprenant :
des moyens de détection (22) destinés à détecter un facteur de production de son qui est une cause de génération de son ; et
un dispositif de réglage de synchronisation de début de production de son (27), destiné à décider d'une synchronisation de début pour produire un son, qui correspond au facteur de production de son, sur la base de la synchronisation de la musique qui est reproduite au moment de la génération du facteur de production de son.

14. Dispositif destiné à délivrer en sortie un signal audio selon la revendication 13, comprenant en outre un moyen de génération d'accompagnement (25) destiné à générer un accompagnement qui correspond à l'état d'un jeu ;
dans lequel ledit dispositif de synchronisation de début de production de son est agencé de manière à générer une mélodie en décidant d'une synchronisation de début afin de produire la mélodie qui correspond au facteur de production de son sur la base de la progression de l'accompagnement au moment de la génération du facteur de production de son.
